# NEW EUROPEAN PATENT SPECIFICATION

(11) **EP 0 566 201 B2**
(45) Date of publication and mention of the opposition decision: **02.07.2003**
(45) Mention of the grant of the patent: 03.12.1997
(21) Application number: 93201063.0
(22) Date of filing: 13.04.1993
(51) Int. Cl.: A01J 7/00, A01K 1/12

(54) **A construction for automatically milking animals, such as cows**
Gerät zum automatischen Melken von Tieren, wie zum Beispiel Kühen
Dispositif de traite automatique d'animaux, par exemple des vaches

(30) Priority: 13.04.1992 NL 9200677
(43) Date of publication of application: 20.10.1993
(73) Proprietor: MAASLAND N.V., 3155 PD Maasland (NL)
(72) Inventor: van der Lely, Cornelis, CH-6300 Zug (CH)
(74) Representative: Corten, Maurice Jean F.M.

(56) References cited:
- DE-A- 3 702 465
- GB-A- 1 372 355
- SU-A- 1 613 067
- US-A- 3 460 515
- LANDTECHNIK vol. 45, no. 12, December 1990, LEHRTE, DE pages 437 - 440 ,
- XP164915 R. ARTMANN ET AL. 'ENTWICKLUNGSSTAND VON MELKROBOTERN'
- Kervina F. et al, "System Solutions for dairy cows", 1976, Alfa-Laval AB

## Description

The invention relates to a construction for automatically milking animals, such as cows, comprising a milking robot, the milking parlour being accommodated in an enclosed area, which area comprises N sub-areas, N being at least three, which sub-areas are arranged to accommodate N-1 groups and wherein the animals are to move to the milking robot from a given sub-area.

Such a construction is known from an article in Landtechnik 45 (1990) Dezember No. 12, Lehrte, DE (437-440).

In this construction there are three areas in which a group of animals can be accommodated. However in one of these areas an animal is separated if there is observed that there is a problem with said animal, e.g. the animal has mastitis. Once the animal has entered this area, the animal can not enter the milking parlour until the farmer has decided that said animal can leave the area.

The animals which are staying in the other two areas can move from one area to the other area, via the milking parlour.

The above mentioned construction has the disadvantage that it is not possible to milk two groups of animals one after the other without mixing the groups of animals with each other.

The invention has for its object to provide a construction in which the above disadvantage will at least be obviated as much as possible.

According to the invention the construction is therefore characterized by the features of claim 1. This system provides the advantage that a first group of animals can be milked automatically, while a second group of animals, after having been milked, can rest for a while, in a separate sub-area, before being milked again. So it is guaranteed that the last animal of the second group that was milked has a rest period of at least the time it takes to milk the whole group of animals. Furthermore it is prevented that the groups of animals are mixed with each other.

It is of further advantage if the milking system will comprise two or more milking robots and/or if the cows are being milked by the robot without the supervision of a person.

In accordance with a further preferred feature of the invention, at least two milking robots are present in the milking parlour, one of which milking robots may switched into operation when the other milking robot is no capable of handling the desired number of animals in the desired time.

In accordance with a further preferred feature of the invention, the construction includes at least one expelling implement for moving the animals in the construction, which expelling implement can produce one or more acoustic signals and one or more electroshocks. Using the expelling implement, it is possible to drive a group of animals in its totality from one sub-area to another sub-area. In order to check whether a group of animals has left a given sub-area, the construction includes, in accordance with a further preferred feature of the invention, a plurality of sensors, by means of which the presence and/or the absence of the animals in an area can be established.

In accordance with the invention, the area is divided into sub-areas in such a manner that groups of animals can be milked immediately one after the other in the milking parlour. For that purpose, the area comprises N+1 sub-areas for N groups of animals. During milking of one group of animals, the sub-area in which the group of animals to be milked is located, communicates via the milking parlour in one direction with another sub-area. The group of animals to be milked can therefore only reach the other sub-area via the milking parlour. After the last animal of a group of animals has arrived in the other sub-area via the milking parlour, the sub-area is filled again with a new group of animals and the group of milked animals is simultaneously moved to an other sub-area. By circulating the groups of animals through the several sub-areas, it is thus possible for groups of animals to be automatically milked e.g. three times in every 24 hours' period. The construction as per the invention may comprise a building, a fenced yard, a cow shed and/or other places for dairy animals.

For a better understanding of the invention and to show how the same may be carried into effect, reference will now be made, by way of example, to the accompanying drawing, in which:

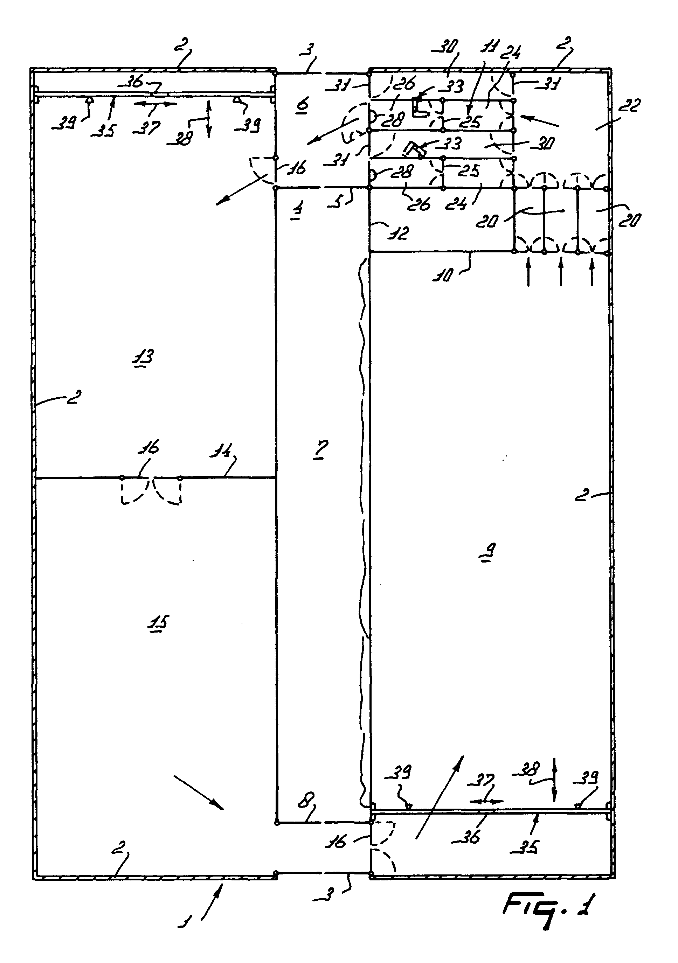

Figure 1 is a plan view of the construction for automatically milking animals.

The plan view shown in Figure 1 shows a stable or dwelling place 1 for milch animals, which is entirely or partly enclosed by a number of walls 2. In this embodiment, the walls 2 are provided on both sides of the stable 1 with a set of doors 3, through which the animals can be brought inside or outside. In this case the stable is a closed loose house, wherein the animals are staying in the house. The invention, however, also relates to an open loose house, in which, for example, one of the walls 2 is entirely or partly omitted, so that the animals can freely go inside or outside via a passage located next to the stable. In the embodiment shown, there is located in the centre of the smallest dimension of the stable 1 a feeding passage 4 which extends through a portion of the stable 1 and is separated from the area located on either side thereof by a wall having vertical rods or similar barriers, through which the animals can pass their heads so as to obtain fodder from the feeding passage 4. The feeding passage 4 is divided into two sections by swing doors 5, a first section 6 being bounded by the doors. 3 in the wall 2 and the swing doors 5, while the second section 7 is bounded by the swing doors 5 and a set of further doors 8 at the end of the feeding passage 4. Taken in the longitudinal direction, the first section 6 is, as regards its dimensions, significantly smaller than the second section 7; the length of the first section 6 amounts to approximately 1/6 of the length of the second section 7.

On either side of the feeding passage 4, the stable 1 has a number of sub-areas in which the animals can be housed. The first sub-area 9 is bounded by two walls 2, the wall with vertical rods or similar barriers and a first partition 10. The length of the area 9 between the first partition and the wall 2 amounts to approximately 4/5 of the length of the longest side of the stable 1. The third area 11 of the stable 1 is bounded by walls 2, a first partition 10 and a second partition 12. The length between the first partition 10 and the wall 2 of the third area 11 amounts to approximately 1/5 of the length of the longest side of the stable 1. The third area 11 borders by means of the second partition 12 on the first area 6.

At the other side of the feeding passage 4, the stable 1 has a third sub-area 13 which is bounded by two walls 2, the wall with vertical rods or similar barriers and a second partition 14. The second partition 14 forms a division between the third sub-area 13 and a second sub-area 15. The second sub-area 15 is bounded, as is also the third sub-area 13, by walls 2, the wall with vertical rods or similar barriers and the second partition 14. The length of the third sub-area 13 and the second sub-area 15 amounts to approximately half the length of the longest side of the stable 1.

The partitions between the sub-areas are further provided with first doors 16, through which the animals have access from one sub-area to an other sub-area. In addition, three sanitation areas 20, each having room for one animal, are arranged in the third area 11. In the sanitation areas 20, the animals can be cleaned and/or disinfected by a (non-shown) cleaning/disinfecting implement. After the animals have been treated in the sanitation areas 20, the animals can move to an intermediate area 22 positioned in the third area 11. From the intermediate area 22 the animal can move to two adjacently positioned waiting boxes 24. The waiting boxes 24 have a second door 25, which allows the animals to enter milking boxes 26 positioned in the extension of the waiting boxes 24. The milking boxes 26 are provided with a feeding trough 28. By means of a (non-shown) fodder dosing system, concentrated feeding material can be provided to the animals in the feeding trough 28. In addition to each of the waiting boxes 24 and the milking boxes 26 there is a passageway 30 having third doors 31. Located in the passageway 30, near each of the milking boxes 26, there is a milking robot 33, by means of which an animal standing in the milking box 26 can be milked automatically. In operation, the milking operation is normally performed with one milking robot, and the second milking robot is not used until the first milking robot cannot duly milk the number of animals.

Both on the left-hand side and on the right-hand side of the feeding passage 4, an expelling implement 35 extends through the overall width of the stable 1, bounded by the wall 2 and the wall having vertical rods or similar barriers. The expelling implement 35 preferably includes a telescoping arm 36 which extends in the lateral direction over the sub-areas 9, 13, 15 and is suspended from a travelling trolley construction in the stable 1. The arm 36 is movable in the direction indicated by arrows I. The arm 36 is equipped with at least one descending wire to which current can be applied (electric fence voltage). The arm 36 can be moved in the direction indicated by arrows 38 in the longitudinal direction of the stable 1 along a (non-shown) rail, as is customary for a travelling trolley. In addition to the descending wire, the arm 36 is provided with means 39 which supply light signals and/or acoustic signals and can co-operate with the descending wire. When the animals are to be driven, for example, because the animals are to be moved from one sub-area to another, an acoustic and/or light signals is supplied by the light and/or acoustic means 39, which is an indication to the animals that they are to leave the relevant sub-area. If necessary, the expelling implement 35 is moved forwards in the longitudinal direction of the stable 1, the animals still present in the relevant sub-area being induced by the wire, which is suspended from the arm 36 and on which there is an electric charge, to move to the other sub-area.

The construction for automatically milking animals operates as follows:

As has already been stated hereinbefore, the stable 1 comprises in this embodiment three sub-areas. A hundred cows are, for example, accommodated in the sub-areas, the animals being subdivided into two groups of fifty animals, each group being housed in separate sub-areas, so that the animals of this group can successively be milked in defined time intervals. The length of the time intervals is determined by the number of milking runs per 24 hours' period. Starting from the assumption that there are, for example, three milking runs per 24 hours' period, this consequently means that the length of the time intervals corresponds to eight hours, in other words: after eight hours a group of previously milked animals is milked again. This means that in each 24 hours' period each group of fifty animals all pass three times through all the three sub-areas 9, 13, 15.

As a starting point, les it be assumed that the first group of fifty animals is in the second sub-area 15 and the second group of fifty animals is accommodated in the first sub-area 9. The animals of the second group can move at random from the first sub-area 9 to the sanitation areas 20, in which the udder and/or the teats of in this case always a maximum of three animals can be cleaned. After the udder and/or the teats of an animal have been cleaned, the animal leaves the sanitation area 20 and arrives in the intermediate area 22, so that a number of animals can be present in the intermediate area 22. From the intermediate area 22 always one animal can enter the waiting box 24 when this box is free or becomes free. From the waiting box 24 the animal can thereafter walk to the milking box 26 when it is released by the second door 25. In the milking box 26, the animal is identified by a (non-shown) animal identification system. On the basis of the animal identification data, a quantity of concentrated fodder matched to the relevant animal is deposited in the feeding trough 28 by a fodder dosing system. In addition, the milking robot 33 is energized by a (non-shown) computer, whereafter the animal is milked automatically.

If at a given instant it should appear that too many animals arrive in the intermediate area 22, then the other milking robot 33 can temporarily be switched-on with the object of reducing in that manner the waiting time of the animals in the intermediate area 22.

After the computer has determined that the animal has been milked, the animal leaves the milking box 26 and passes via the first area 6 into the third sub-area 13. In the third sub-area 13, the animal can optionally take some rest in (non-shown) rest boxes. Each of the fifty animals present in the first sub-area 9 can in this manner go voluntarily and in any random sequence to the third sub-area 13, so that after four hours all the fifty animals of the second group may have moved via the milking robot 33 to the third sub-area 13. It might, however, also occur that one or more animals, for whatever reason, remain behind in the first sub-area 9. This is, however, undesirable, since the remaining animals then would mix with the other, first group of animals which, after the above-mentioned four hours have elapsed, arrive in the first sub-area 9. To prevent intermingling of groups of animals, it is therefore checked, after the four hours have elapsed, with the aid of a plurality of (non-shown) sensors whether animals of the second group are still present in the first sub-area 9. The sensors may be infrared sensors, using which it can be determined on the basis of the animals' body heat whether animals are still present in the relevant sub-area. Should the situation now be such that animals have still stayed behind in the first sub-area 9, then by giving light signals and/or acoustic signals in the relevant area the animals are thereafter induced to leave the first sub-area 9. If after due time it appears that the animals do not react to these signals, then the expelling implement 35 can be advanced step-by-step in the longitudinal direction of the first sub-area towards the sanitation areas 20. The animals still present in the first sub-area 9 are then incited by the live wires suspended from the arm 36 to go to the sanitation areas 20. When all the fifty animals of the second group have left the first sub-area 9, the way is cleared by opening the door 16 between the second sub-area 15 and the first sub-area 9, whereafter the first group of fifty animals can move to the first sub-area 9. The animals of the first group will then usually go voluntarily to the first sub-area 9, because they instinctively sense that they can go from the first sub-area 9 to the milking box 26, where they are milked and supplied with concentrated fodder. A different possibility to lure the animals to the first sub-area 9, is to deposit green forage in the feeding passage 4 near the walls with vertical rods. After some time it is also here checked by means of sensors whether all the animals of the second group have gone to the first sub-area 9; if there are stragglers then they are forced, in the manner already described in the foregoing, using the expelling implement 35 to leave the sub-area. When the second sub-area 15 is empty, the door 16 between the second sub-area 15 and the first sub-area 9 is closed. Simultaneously the door 16 between the third sub-area 13 and the second sub-area 15 is opened and the second group of animals, which at that moment is present in the third sub-area 13, are notified by means of light signals and/or acoustic signals to move to the second sub-area 15. Straggling animals can also here, after some time, be actively forced by means of the expelling implement 35 to move to the second sub-area 15. The second group of fifty animals is given a four hours' rest in the second sub-area 15, whilst the first group of animals in the first sub-area 9 is given four hours' time to move via the milking box 26 to the third sub-area 13 which is empty at that moment.

After four hours it is assumed that the first group of animals has been milked and it is consequently assumed that the entire group has moved to the third sub-area 13, whereafter the second group of animals can again enter the first sub-area 9. Thereafter the rotation of the two groups of animals through the three sub-areas can start again. Thus, the two groups of animals can be milked immediately one after the other in the milk box(es) 26.

It will be obvious that the invention is not limited to the embodiment described in the foregoing, in which the stable 3 comprises three sub-areas for two groups of animals, but that the stable 1 may alternatively comprise N+1 sub-areas for N groups of animals.

## Claims

1. A construction for automatically milking animals, such as cows, comprising a milking parlour with a milking robot, the milking parlour being accommodated in an enclosed area, which area comprises N sub-areas, N being at least three, which sub-areas are arranged to accommodate N-1 groups and wherein the animals are to move to the milking robot from a given sub-area, **characterized in that** said given sub-area communicates via the milking parlour in one direction with another sub-area the said N sub-areas are in connection with each other in such a way, that each of the N-1 groups of animals can circulate in a one way rotational movement through all of the N sub-areas and the milking parlour, while the groups of animals remain separated from each other.

2. A construction as claimed in claim 1, **characterized in that** the construction includes a plurality of sensors, by means of which the presence and/or the absence of the animals in a sub-area can be determined.

3. A construction as claimed in claim 1 or 2, **characterized in that** in the milking parlour there are at least two milking robots, one of the milking robots being switchable into operation when the other milking robot is not capable of handling the desired number of animals in the desired time.

4. A construction as claimed in any one of the preceding claims, **characterized in that** the construction includes a cleaning area, in which the udder and/or the teats of an animal can be cleaned, this cleaning area being remote from the milking area.

5. A construction as claimed in any one of the preceding claims, **characterized in that** the construction includes at least one expelling implement for driving one or more of the animals from one sub-area to another sub-area.

6. A construction as claimed in claim 5, **characterized in that** the expelling implement can produce one or more acoustic signals and/or light signals and one or more electroshocks.

7. A construction as claimed in any one of the preceding claims, **characterized in that** the building includes a loose housing.

8. A construction as claimed in any one of the preceding claims, **characterized in that** means are present, by means of which it can be determined automatically whether a further milking robot will be switched on when a group of animals cannot be milked in time.

9. A construction as claimed in any one of the preceding claims, **characterized in that** the area comprises three boxes, each having a cleaning implement for cleaning the teats and/or the udder of the animal.

10. A construction as claimed in any one of the preceding claims, **characterized in that** the construction includes a waiting box, for an animal before the animal will enter the milking box.

11. A construction as claimed in any one of the preceding claims, **characterized in that** the area includes means for moving groups of animals with a fixed time interval from one sub-area to another

12. A construction as claimed in any one of the preceding claims, **characterized in that** an animal identification system is present, with the aid of which it can be determined how much feed will be supplied to each animal.

13. A construction as claimed in any one of the preceding claims, **characterized in that** the enclosed area includes an expelling installation for driving one or a plurality of animals from a sub-area, the expelling installation comprising a sensor, by means of which it can be determined whether one or more animals is/are still present in a given sub-area.

14. A construction as claimed in claim 13, **characterized in that** the sensor is an infrared sensor.

15. A construction as claimed in claim 13 or 15, **characterized in that** the expelling installation comprises an overhead trolley, on which sensors have been arranged.

16. A construction as claimed in any one of claims 13 to 15, **characterized in that** the expelling installation has one or more wires, by means of which electric shocks can be produced when an animal comes into contact with the wire.

17. A construction as claimed in any one of claims 13 to 16, **characterized in that** the expelling installation includes means, with which acoustic signals can be supplied before the animal receives a shock via the wire.

18. A construction as claimed in any one of claims 13 to 17, **characterized in that** a light source is located near the wire, which lights up as soon as a wire approaches an animal.

## Patentansprüche

1. Vorrichtung zum automatischen Melken von Tieren, wie z. B. von Kühen, mit einem Melkstand und einem Melkroboter, wobei der Melkstand in einem umschlossenen Bereich mit n Unterbereichen angeordnet ist, wobei n mindestens drei ist, wobei die Unterbereiche zur Aufnahme von n-1 Gruppen von Tieren geeignet sind, und wobei sich die Tiere von einem vorgegebenen Unterbereich aus zu dem Melkroboter zu begeben haben,
**dadurch gekennzeichnet, daß** der vorgegebene Unterbereich über den Melkstand in einer Richtung mit einem weiteren Unterbereich verbunden ist, daß die n Unterbereiche miteinander derart verbunden sind, daß jede der n-1 Gruppen von Tieren in einer Rotationsbewegung in einer Richtung alle n Unterbereiche und den Melkstand durchlaufen kann, wobei die Gruppen der Tiere voneinander getrennt bleiben.

2. Vorrichtung nach Anspruch 1,
**gekennzeichnet durch** mehrere Sensoren, mit denen die Anwesenheit und/oder die Abwesenheit der Tiere in einem Unterbereich festzustellen ist.

3. Vorrichtung nach Anspruch 1 oder 2,
**dadurch gekennzeichnet, daß** in dem Melkstand mindestens zwei Melkroboter vorhanden sind, wobei der eine Melkroboter einzuschalten ist, wenn der andere Melkroboter nicht in der Lage ist, die gewünschte Anzahl von Tieren in der gewünschten Zeit zu melken.

4. Vorrichtung nach einem der vorhergehenden Ansprüche,
**gekennzeichnet durch** eine Reinigungszone, in der das Euter und/oder die Zitzen eines Tieres zu reinigen sind, wobei diese Reinigungszone von der Melkzone entfernt ist.

5. Vorrichtung nach einem der vorhergehenden Ansprüche,
**gekennzeichnet durch** mindestens eine Austreibevorrichtung, um ein oder mehrere Tiere von einem Unterbereich in einen anderen Unterbereich zu treiben.

6. Vorrichtung nach Anspruch 5,
**dadurch gekennzeichnet, daß** von der Austreibevorrichtung ein oder mehrere akustische Signale und/oder Lichtsignale und ein oder mehrere Elektroschocks zu erzeugen sind.

7. Vorrichtung nach einem der vorhergehenden Ansprüche,
**dadurch gekennzeichnet, daß** das Gebäude einen Laufstall enthält.

8. Vorrichtung nach einem der vorhergehenden Ansprüche,
**dadurch gekennzeichnet, daß** eine Einrichtung vorhanden ist, mittels der automatisch festzustellen ist, ob ein weiterer Melkroboter eingeschaltet wird, wenn eine Gruppe von Tieren nicht rechtzeitig zu melken ist.

9. Vorrichtung nach einem der vorhergehenden Ansprüche,
**dadurch gekennzeichnet, daß** in dem Bereich drei Boxen angeordnet sind, die jeweils eine Reinigungsvorrichtung zum Reinigen der Zitzen und/oder des Euters des Tieres aufweisen.

10. Vorrichtung nach einem der vorhergehenden Ansprüche,
**gekennzeichnet durch** eine vor Eintritt in die Melkbox vorgesehene Wartebox für ein Tier.

11. Vorrichtung nach einem der vorhergehenden Ansprüche,
**dadurch gekennzeichnet, daß** der Bereich eine Einrichtung aufweist, um Gruppen von Tieren in festen Zeitabständen von einem Unterbereich in den anderen zu bewegen.

12. Vorrichtung nach einem der vorhergehenden Ansprüche,
**dadurch gekennzeichnet, daß** ein Tieridentifizierungssystem vorhanden ist, mittels dessen festzustellen ist, wieviel Futter jedem Tier zugeteilt wird.

13. Vorrichtung nach einem der vorhergehenden Ansprüche,
**dadurch gekennzeichnet, daß** der umschlossene Bereich zum Austreiben eines oder mehrerer Tiere aus einem Unterbereich eine Austreibevorrichtung mit einem Sensor aufweist, mit dem festzustellen ist, ob sich ein oder mehrere Tiere noch in einem bestimmten Unterbereich aufhalten.

14. Vorrichtung nach Anspruch 13,
**dadurch gekennzeichnet, daß** der Sensor ein InfrarotSensor ist.

15. Vorrichtung nach Anspruch 13 oder 15,
**dadurch gekennzeichnet, daß** die Austreibevorrichtung eine Deckenlaufkatze mit Sensoren aufweist.

16. Vorrichtung nach einem der Ansprüche 13 bis 15,
**dadurch gekennzeichnet, daß** die Austreibevorrichtung einen oder mehrere Drähte aufweist, mittels derer Elektroschocks zu erzeugen sind, wenn ein Tier mit dem Draht in Kontakt kommt.

17. Vorrichtung nach einem der Ansprüche 13 bis 16,
**dadurch gekennzeichnet, daß** die Austreibevorrichtung eine Einrichtung aufweist, mittels der akustische Signale zu erzeugen sind, bevor das Tier über den Draht einen Schock erhält.

18. Vorrichtung nach einem der Ansprüche 13 bis 17,
**dadurch gekennzeichnet, daß** nahe dem Draht eine Lichtquelle angeordnet ist, die aufleuchtet, sobald sich ein Tier einem Draht nähert.

## Revendications

1. Dispositif de traite automatique d'animaux, par exemple des vaches, comprenant une stalle de traite avec un robot trayeur, la stalle de traite étant installée dans une zone clôturée, laquelle zone comprend N sous-zones, N étant au moins trois, lesquelles sous-zones sont aménagées pour héberger N-1 groupes, et dans lequel les animaux ont à se rendre jusqu'au robot trayeur à partir d'une sous-zone donnée, **caractérisé** ladite sous-zone donnée communique à travers la stalle de traite dans une direction avec une autre sous-zone, que lesdites N sous-zones sont en communication entre elles de telle manière que chacun des N-1 groupes d'animaux peut circuler en un mouvement tournant dans un seul sens en passant par toutes les N sous-zones et la stalle de traite tandis que les groupes d'animaux restent séparés les uns des autres.

2. Dispositif selon la revendication 1, **caractérisé en ce que** le dispositif comporte une pluralité de capteurs au moyen desquels la présence et/ou l'absence des animaux dans une sous-zone peut être déterminée.

3. Dispositif selon la revendication 1 ou 2, **caractérisé en ce que**, dans la stalle de traite, il y a au moins deux robots trayeurs, un des robots trayeurs pouvant être mis en service quand l'autre robot trayeur n'est pas capable de traiter le nombre voulu d'animaux dans le temps voulu.

4. Dispositif selon l'une quelconque des revendications précédentes, **caractérisé en ce que** le dispositif comporte une zone de nettoyage dans laquelle le pis et/ou les trayons d'un animal peuvent être nettoyés, cette zone de nettoyage étant à distance de la zone de traite.

5. Dispositif selon l'une quelconque des revendications précédentes, **caractérisé en ce que** le dispositif comporte au moins un appareil expulseur pour faire passer un ou plusieurs des animaux d'une zous-zone à une autre sous-zone.

6. Dispositif selon la revendication 5, **caractérisé en ce que** l'appareil expulseur peut produire un ou plusieurs signaux acoustiques et/ou signaux lumineux, et un ou plusieurs électrochocs.

7. Dispositif selon l'une quelconque des revendications précédentes, **caractérisé en ce que** le bâtiment comporte un local de stabulation libre.

8. Dispositif selon l'une quelconque des revendications précédentes, **caractérisé en ce que** des moyens sont présents, au moyen desquels il peut être déterminé automatiquement s'il y a lieu de mettre en action un autre robot trayeur quand un groupe d'animaux ne peut pas être trait à temps.

9. Dispositif selon l'une quelconque des revendications précédentes, **caractérisé en ce que** la zone comprend trois stalles ayant chacune un dispositif nettoyeur pour nettoyer les trayons et/ou le pis d'un animal.

10. Dispositif selon l'une quelconque des revendications précédentes, **caractérisé en ce que** le dispositif comprend une stalle d'attente pour un animal avant que l'animal entre dans la stalle de traite.

11. Dispositif selon l'une quelconque des revendications précédentes, **caractérisé en ce que** la zone comporte des moyens pour faire passer des groupes d' animaux, avec un intervalle fixe de temps, d'une sous-zone à une autre.

12. Dispositif selon l'une quelconque des revendications précédentes, **caractérisé en ce qu'**un système d'identification des animaux est présent, à l'aide duquel il peut être déterminé combien de nourriture sera fournie à chaque animal.

13. Dispositif selon l'une quelconque des revendications précédentes, **caractérisé en ce que** la zone clôturée comporte une installation d'expulsion pour conduire un ou plusieurs animaux hors d'une sous-zone, l'installation d'expulsion comprenant un capteur au moyen duquel il peut être déterminé si un ou plusieurs animaux est ou sont encore présents dans une sous-zone donnée.

14. Dispositif selon la revendication 13, **caractérisé en ce que** le capteur est un capteur à infrarouge.

15. Dispositif selon la revendication 13 ou 14, **caractérisé en ce que** l'installation d'expulsion comprend un chariot de pont roulant sur lequel des capteurs ont été disposés.

16. Dispositif selon l'une quelconque des revendications 13 à 15, **caractérisé en ce que** l'installation d'expulsion a un ou plusieurs fils métalliques au moyen desquels des chocs électriques peuvent être produits quand un animal vient en contact avec le fil.

17. Dispositif selon l'une quelconque des revendications 13 à 16, **caractérisé en ce que** l'installation d'expulsion comporte des moyens avec lesquels des signaux acoustiques peuvent être fournis avant que l'animal reçoive un choc par l'intermédiaire du fil.

18. Dispositif selon l'une quelconque des revendications 13 à 17, **caractérisé en ce qu'**une source de lumière est située près du fil, qui s'allume dès qu'un fil s'approche d'un animal.
